# EUROPEAN PATENT APPLICATION

(11) **EP 2 463 978 A1**
(43) Date of publication of application: **13.06.2012**
(21) Application number: 10194152.4
(22) Date of filing: 08.12.2010
(51) Int. Cl.: H02J 3/18

(54) **Power factor correction for multiple generators**

(71) Applicant: Alstom Technology Ltd, 5400 Baden (CH)
(72) Inventor: Dalessandro, Luca, CH-8005, Zürich (CH)

(57) **Abstract**

Apparatus for the supply of electrical power comprises a first AC power line (8a) supplied by a first generator (4a) and a second AC power line (8b) supplied by a second generator (4b). A circuit (19) coupled between the first and second power lines (8a,8b) corrects the power factor of the lines using either a direct AC-AC converter (22) or back-to-back AC-DC converters (18a,18b). Back-to-back converters create a DC link (20) from which DC power can be supplied to a HVDC power line (32) or to windings (34a,34b) of the generators (4a,4b). Conversely, turbines (2a,2b) that drive the generators (4a,4b) can be started up by using power supplied on the DC link (20) and operating the AC-DC converters (18a,18b) in reverse to drive the generators (4a,4b) as motors.

## Description

### Technical field

The invention relates to the field of electrical power generation. It has application to power supply systems that involve the connection of multiple generators to multiple networks.

### Background of the invention

It is well known that the efficiency of power supply to a network depends on the power factor of the supply. When supplying a network that presents a large reactive load, the supply has a power factor lower than 1, hence the average (active) power delivered to the network is much less than the instantaneous (apparent) power. Therefore the components of the system must be rated to withstand high values of current and voltage (so their dimensioning is inefficient) but the power actually delivered by the system is decreased by the power factor coefficient.

It is therefore a goal of power supply systems to increase the efficiency of the generating system by operating the electrical generator at a power factor close to 1. The effect would be to enhance and/or upgrade the capability of the generator without replacing the generator by a higher rating unit.

Various components have been used to adjust or compensate for the low power factor of a transmission or distribution network and to try to bring it closer to unity. Circuits that may be added to a network for this purpose include:
1) Active filters.
2) Static VAR systems (mostly used in power transmission and distribution, not generation).
3) Shunt elements (isolated or not) used to improve/correct the waveforms supplied.

### Summary of the invention

The invention provides apparatus for the supply of electrical power as defined in claim 1. Preferred but optional features of the apparatus are defined in the dependent claims.

The invention provides the following benefits:
1) Power factor correction.
2) Power quality improvement (harmonic cancellation / injection).
3) Power upgrade, i.e. more active power delivered to the network for the same rating of generator.
4) Improved partial load efficiency: reduced load variation and hence more stable generation operating point which leads to highest efficiency operation of prime movers with the coupling of two or more power lines.
5) HVDC connection.
6) Start up facility for the prime movers that drive the generators.
7) Frequency conversion (cross power lines supply).
8) Generator backup, UPS, grid stability.
9) DC distribution: excitation boosting from the HVDC connection (exciter not necessary).
10) Retrofit solution for existing plants.
11) Machine HV testing.
12) Harmonic injection to enhance HV transformer and electrical equipment (for inst.

Breaker) upgrade.

### The drawings

Fig. 1 illustrates a pair of generators supplying a pair of networks and provided with a start frequency converter in accordance with the prior art.
Fig. 2 illustrates power supply apparatus according to a first embodiment of the invention.
Fig. 2A illustrates power supply apparatus according to a second embodiment of the invention.
Fig. 2B illustrates power supply apparatus according to a third embodiment of the invention.
Fig. 3 illustrates power supply apparatus according to a fourth embodiment of the invention.
Fig. 4 illustrates power supply apparatus according to a fifth embodiment of the invention.

### Description of preferred embodiments of the invention

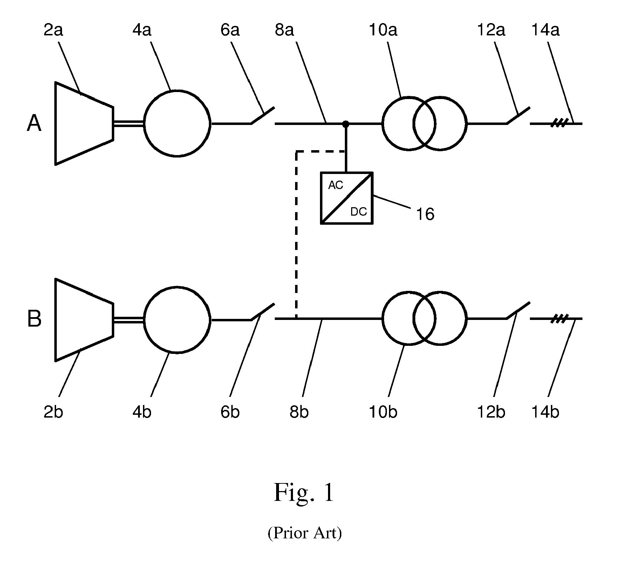

Fig. 1 illustrates a conventional arrangement of a power supply apparatus in which a first power train A comprises a prime mover, for instance a gas turbine 2a that drives an electrical generator 4a. A switch 6a, for instance a generator circuit breaker, selectively connects the output of the generator 4a to an AC power line 8a, which typically carries three-phase alternating currents. The power line 8a is selectively connected via a HV step-up transformer 10a and a further switch 12a, for instance a HV circuit breaker, to the network 14a to which power is to be supplied. The network 14a may be, for example, an electricity grid. A second power train B comprises the same set of components: a gas turbine 2b, an electrical generator 4b, a switch 6b, an AC power line 8b, a transformer 10b and a further switch 12b, which together supply power to a second network 14b.

A start frequency converter (SFC) 16 is provided, which is for instance a DC-AC converter connected between an external power supply, in this case a DC power supply (not shown) and the first AC power line 8a. The SFC 16 is used to assist the start-up of the gas turbine 2a, outputting AC power to the AC power line 8a and directing it towards the generator 4a, which in this mode is operated as a synchronous motor drive system to rotate the rotor of the gas turbine 2a. As illustrated by a dashed line, the SFC 16 may also be connected to the second AC power line 8b to assist with starting the second gas turbine 2b. Alternatively, each power train A, B may be provided with its own independent SFC. Because, in this prior art system, the SFC 16 is used only for initial rotation of the turbine 2, it is typically not dimensioned for permanent operation to handle the current and voltage produced by the generator 4 when it is generating at full power.

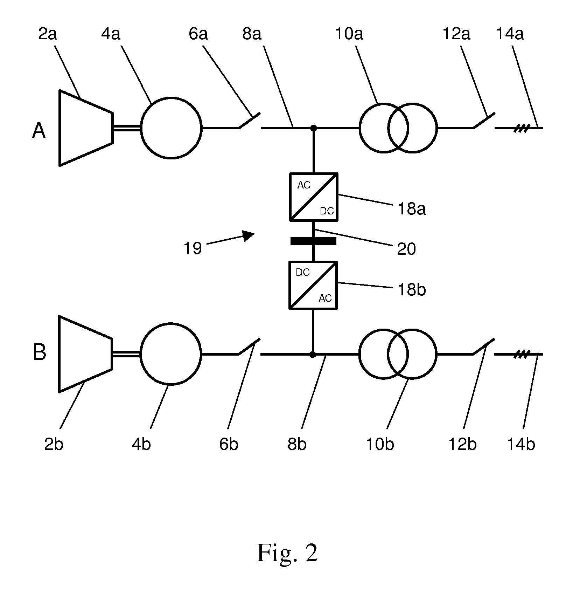

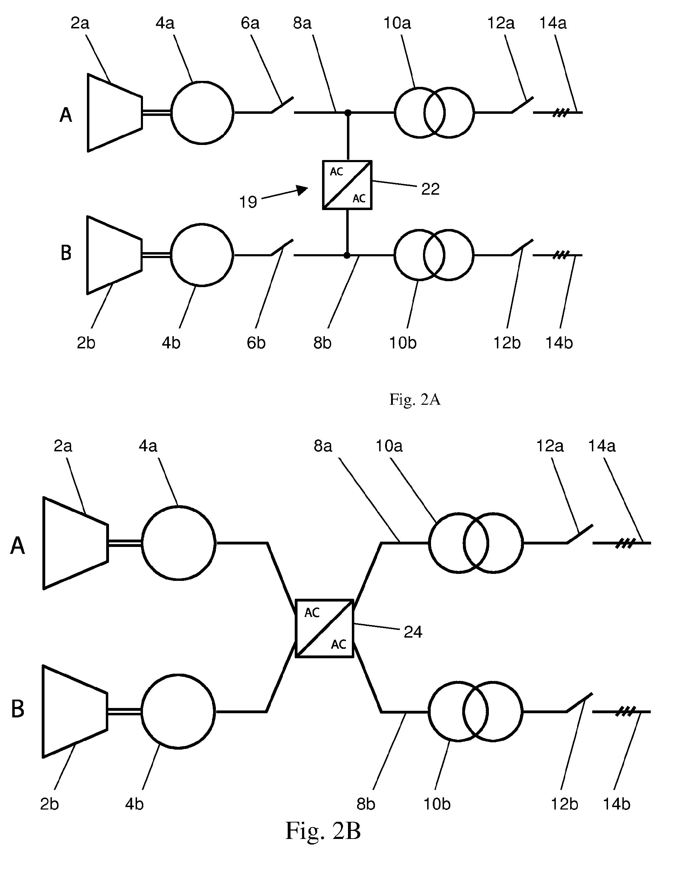

Fig. 2 illustrates a power supply apparatus according to a first embodiment of the invention. The two power trains A and B are the same as in Fig. 1. Their elements are given the same reference numerals and will not be described again here.

Fig. 2 differs from the prior art of Fig. 1 in that the AC power lines 8a; 8b of the respective power trains are coupled together via back-to-back AC-DC converters 18a, 18b that act as a power factor correction circuit 19 for both power lines. The converters 18a, 18b may be pulse-width-modulated or angle-modulated active converters and are rated to carry at least a significant proportion of the current generated by the generators 4a, 4b, which is proportional to the reactive power to be compensated. The back-to-back AC-DC converters are connected by a DC link 20. A capacitor (not shown in the drawings), or more typically a bank of capacitors, is connected in parallel between the two voltage lines of the DC link. The capacitors store energy in one part of the cycle and deliver it up during another part of the cycle to allow the circuit 19 to correct the power factor and waveform of the AC signal on the power lines 8a, 8b.

The converter 18a can receive AC current from the first AC power line 8a and convert it to DC current on the DC link 20, and thus charges the capacitor bank. The converter 18b can then receive current from the DC link 20 and operate as a DC-AC converter to deliver AC current to the second AC power line 8b. Alternatively, current can be made to flow in the opposite direction through the converters 18b and 18a respectively. By carefully timed control of the switches in the AC-DC converters 18a, 18b current can be removed from one power line 8a, 8b and delivered into the other power line 8b, 8a with a suitable frequency and phase to compensate for reactive loads in the respective networks 14a, 14b and to bring the power factor experienced by each generator 4a, 4b close to unity. The converters can also be controlled to improve the quality of the power delivered to the network, for example by cancelling or injecting harmonics to improve the shape of the waveform.

The back-to-back arrangement of the converters 18a, 18b guarantees an optimal operation of the power factor correction circuit 19 because in this way the process of charging of the capacitors in the DC link is shared by both converters 18a, 18b. The power lines 8a, 8b mutually exchange reactive power and cooperate to maintain the DC link capacitors always charged so that the capacitors are always able to supply the reactive current that is necessary to correct the power factor of the supply.

It will be understood that, for simplicity, the drawings use a single line to indicate a current supply, even if that supply comprises multiple phases. Thus, for example, although the AC-DC converter 18a is illustrated with a single connection to the AC power line 8a, at any particular time the converter 18a may be drawing a supply of current from one phase of power line 8a, while simultaneously delivering current back to a different phase of power line 8a. The same is true of converter 18b and power line 8b.

The AC-DC converters are controlled using a suitable modulation strategy that draws portions of the AC current from the two power lines 8a, 8b and recombines or redistributes that current between the power lines with appropriate phases to correct the power factor in the supply to the networks 14a, 14b.

A comparison between Fig. 2 and Fig. 1 makes it evident that during start-up of the gas turbine 2a or 2b according to the present invention, the back-to-back converters 18a, 18b in the power factor correction circuit 19 can take the place of the start frequency converter 16 in the prior art. Therefore, during the turbine start-up procedure, the power necessary to drive the generator as a motor can be taken from the other power train through the back-to-back converter or by feeding into the DC link 20 from an external supply.

By adding a power factor correction circuit 19 as illustrated in Fig. 2 to correct the power factor of each generator 4, the generator can effectively be upgraded without needing to be changed in any way. The generator was previously operating at its maximum rated values of current and voltage to deliver an apparent power, only part of which was useful active power, the rest being wasted by the reactive load of the network. With the power factor corrected to be close to 1, the generator operating at the same ratings can now deliver almost 100% active power to the network, which may represent an increase in efficiency of up to 35%.

Because more actual power is now supplied to the network, the gas turbines 2a, 2b themselves may need to be upgraded. However, that is often easier than upgrading a generator because of the modular nature of a gas turbine, comprising discrete compressor, combustor and turbine components.

The electrical system may thus be constructed in two parts, namely a generator module that provides the active power and a converter module that compensates for the reactive power. The converter module can be supplied for retrofitting to existing power generation plant as a power factor correction circuit in order to increase the efficiency of the plant as just described.

Fig. 2A illustrates a variant of Fig. 2 in which, instead of back-to-back AC-DC converters 18a, 18b, the power factor correction circuit 19 comprises a single AC-AC converter 22. The AC-AC converter 22 is connected directly between the two power lines 8a, 8b and is controlled using a modulation strategy that again draws portions of the AC current from the two power lines 8a, 8b and redistributes that current between them with an appropriate phase to correct the power factor in the supply to the networks 14a, 14b. The AC-AC converter 22 may be, for example, a matrix converter. The topology of the AC-AC converter 22 may be such that it comprises no single DC link and the storage capacitors are distributed.

Fig. 2B illustrates a further variant of Fig. 2, again using a single AC-AC converter 24. In this configuration, the converter 24 receives as its two inputs the phases from the two generators 4a, 4b. Its two outputs are connected to the primary windings of the transformers 10a, 10b. The converter 24 is controlled using a modulation strategy that redistributes the power supply from the generators 4a, 4b to the power lines 8a, 8b with an appropriate phase to correct the power factor in the supply to the networks 14a, 14.

Unlike in Figs. 2 and 2A, in this configuration there is no direction connection between a generator 4 and its respective network 14; the converter 24 receives the entire power output of both generators 4a, 4b and the supply lines 8a, 8b receive all of their supply from the converter 24, which must be rated accordingly. This circuit works most efficiently if the generators 4a, 4b are generating synchronous waveforms with an opportune phase shift between them, so that the various output phases of the generators provide the maximum number of different voltage levels available for the converter 24 to work with. The topology of the AC-AC converter 24 generally will not comprise a DC link or a concentrated bank of capacitors but its storage elements may be distributed capacitors or flying capacitors.

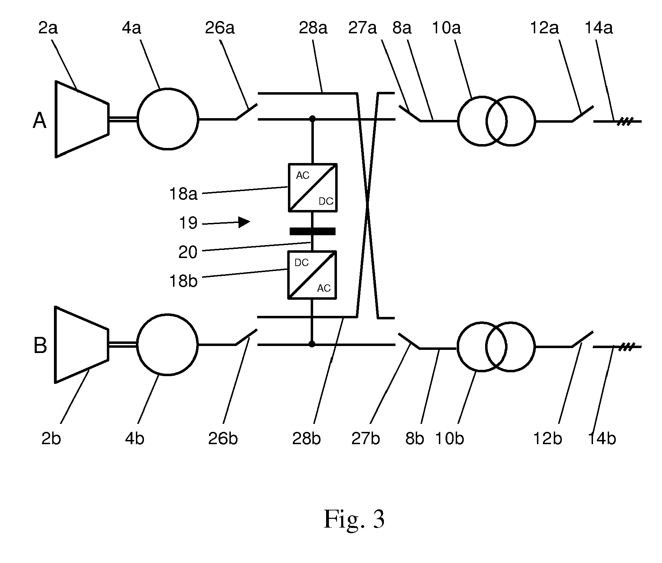

Fig. 3 illustrates a power factor correction circuit 19 that is the same as in Fig. 2 but in this case the connection between the generators 4a, 4b and the power lines 8a, 8b can be reconfigured. The single pole switch 6a is replaced by a two-pole switch 26a, which allows the generator 4a to be coupled selectively to the first power line 8a or to a cross-over connection 28a. Similarly, the single pole switch 6b is replaced by a two-pole switch 26b, which allows the generator 4b to be coupled selectively to the second power line 8b or to a second cross-over connection 28b. Two further two-pole switches 27a, 27b are also provided. Switch 27a allows the first transformer 10a to take its input selectively from the first AC power line 8a or from the second cross-over line 28b. Switch 27b allows the second transformer 10b to take its input selectively from the second AC power line 8b or from the first cross-over line 28a.

The switches 26a and 27b are operated together as a first pair; the switches 26b and 27a are operated together as a second pair.
■ If both pairs of switches 26a, 27b; 26b, 27a are DOWN (as viewed in the drawing), the cross-over connections 28a, 28b are not used and the circuit is the same as in Fig. 2.
■ If the first pair of switches 26a,27b are DOWN and the second pair of switches 26b,27a are UP, then power from generator B is supplied via the cross-over connection 28b directly to network A; and power from generator A is supplied via the power factor correction circuit 19 to network B.
■ If the first pair of switches 26a,27b are UP and the second pair of switches 26b,27a are DOWN, then power from generator A is supplied via the cross-over connection 28a directly to network B; and power from generator B is supplied via the power factor correction circuit 19 to network A.

By crossing over the supply according to the second or third of the configurations just described, the entire output from one generator can be passed through the power factor correction circuit 19 (which must be rated accordingly). This allows the circuit 19 to completely re-shape the waveform of that generator's output, for example in order to change the frequency of the supply delivered to one of the networks from 50Hz to 60Hz. The output from the other generator is then fed directly to the opposite network using the appropriate cross-over connection 28 and it therefore does not receive the benefit of any power factor correction by the circuit 19.

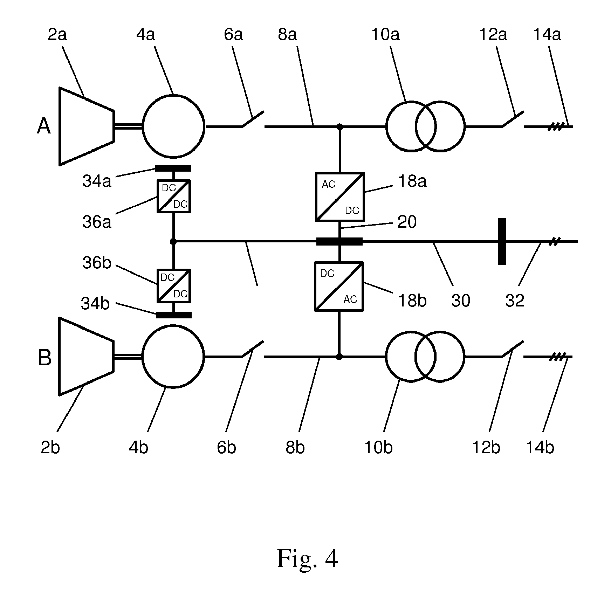

Fig. 4 illustrates an embodiment of the invention that builds on the circuit of Fig. 2 to make greater use of the DC current that is available from the DC link 20 between the back-to-back AC-DC converters 18a,18b. The DC link 20 can be connected to a DC bus 30, which can be used directly to supply a HVDC line 32 for use in the power generation plant without further rectification. Additionally or alternatively, the DC bus 30 can supply power to the field windings 34a,34b of the generators 4a,4b. The supply to the field windings 34a,34b is regulated by the use of DC-DC converters 36a,36b. The DC-DC converters 36a,36b may have a boosting capability in case of transients when the generators' terminal voltage decreases, but there is no need for further rectification of the current.

The invention can improve the efficiency of the supply in the case of a partial load. In an extreme example, if both networks 14a and 14b require only 50% of the nominal load value, the cross coupling between the supply lines 8a,8b by the power factor correction circuit 19 permits one turbine to be run at full load to supply both power networks with higher efficiency. The other turbine can be even shut down. More generally, the cross coupling allows the power requirements of the different network loads to be distributed among the generators in a more efficient way, to satisfy the condition that the prime movers should always run at highest efficiency. In the event of the loss of one generating unit, for instance unit A, then the load A can be still be supplied through the converter by the generating unit B. The generating unit B will supply both load A and B, without performing a total load shedding for line A.

Typically electrical machines need a high-voltage stator windings test (a "ring flux test") in order to prove the integrity and the quality of the electrical insulation before operation or during maintenance intervals. To perform the HV test of the stator winding and stator core, these latter have to be supplied by another generation unit. By using the present invention, generator B can supply the stator of generator A through the converter, and vice versa.

In case of upgrade of the power of a prime mover, the associated generator has to withstand the upgraded torque value. The generator should be able to convert the mechanical input power into electrical output power; and the current and voltage values are usually slightly increased, for instance from 26 kV to 27 kV. The entire power train, including transformer and breakers must also be able to withstand the power upgrade. For the transformer 10a,10b, the main issue is the saturation of the magnetic circuit due to the increased maximum value of the current or voltage. In order to "smooth" the waveforms inputted to the transformer, which are outputted by the power factor correction circuit 19, the correction circuit 19 can generate though opportune modulation a third harmonic type waveform which would be then injected into the transformer 10a,10b or superimposed on the waveform in input to the transformer. The result would be approximately the same peak value of the voltage or current waveform, but enhanced RMS value of the waveforms, i.e. upgraded power level.

Although the invention has been described and illustrated with only two power trains A and B, it will be immediately apparent how it could be extended to additional power trains. For example, the power line 8 of each power train could be connected via its own AC-DC converter 18 to a common DC bus 30.

Although the AC power lines 8a,8b of the invention will most commonly carry a three-phase supply, the invention is equally applicable to other poly-phase supplies - from two phases upwards - with minimal adaptation. Indeed, a greater number of phases is beneficial because it makes more different voltage levels available to the power factor correction circuit 19 at any instant, which helps to ensure that the storage capacitors of the converters remain charged and results in an improved power quality, better output waveforms and better control of the harmonics.

Although the invention has been described in relation to power trains with generators 4 driven by gas turbines 2, it would be equally applicable to generators that are rotary electrical machines driven by any other form of prime mover such as wind- or water-powered turbines or a diesel engine. Indeed, the power factor correction circuit of the invention could be used to couple and condition the AC power supplied to parallel networks by any form of electrical generator.

The invention is not limited to any special power converter topology or modulation strategy. A forced commutated, fully controlled converter is preferred, which may implement IGBT or IGCT semiconductor technology with superior breakdown voltage. The target of this power converter is to have high efficiency; therefore multilevel topologies and soft switching techniques (zero-current switching or zero-voltage switching) would be advantageous.

## Claims

1. Apparatus for the supply of electrical power, comprising:
a first electrical generator (4a) and a second electrical generator (4b);
a first AC power line (8a) and a second AC power line (8b); and
a power factor correction circuit (19) connected to receive input power from the first and second generators (4a,4b) and connected to deliver output power to the first and second AC power lines (8a,8b);
wherein the power factor correction circuit (19) comprises means (18a,18b,22,24) for combining the inputs to form the outputs, whereby the power factors of the outputs are controlled.

2. Apparatus according to claim 1, wherein the first and second generators (4a,4b) are arranged to supply all of their power to the respective inputs of the power factor correction circuit (19); and wherein the first and second AC power lines (8a,8b) are arranged to receive all of their power from the respective outputs of the power factor correction circuit (19).

3. Apparatus according to claim 1, wherein:
the first AC power line (8a) is supplied by the first generator (4a);
the second AC power line (8b) is supplied by the second generator (4b); and
the power factor correction circuit (19) is coupled between the first AC power line (8a) and the second AC power line (8b), whereby the power factor correction circuit (19) receives input power from the first and second generators (4a,4b) via the first and second AC power lines and delivers output power back to the first and second AC power lines to control the power factor of the supply on the first and second AC power lines (8a,8b).

4. Apparatus according to claim 3, further comprising switching means (26a,26b,27a,27b,28a,28b) are operable to configure the apparatus for the first AC power line (8a) to receive all of its power directly from the second generator (4b) and for the second AC power line (8b) to receive all of its power through the power factor correction circuit (19) from the first generator (4a).

5. Apparatus according to claim 4, wherein the switching means (26a,26b,27a,27b,28a,28b) are operable to configure the apparatus for the first AC power line (8a) to receive all of its power through the power factor correction circuit (19) from the second generator (4b) and for the second AC power line (8b) to receive all of its power directly from the first generator (4a).

6. Apparatus according to any of claims 3 to 5, wherein the power factor correction circuit (19) is an AC-AC converter (22,24).

7. Apparatus according to any of claims 3 to 5, wherein the power factor correction circuit (19) comprises a first AC-DC converter (18a) and a second AC-DC converter (18b) arranged back-to-back.

8. Apparatus according to claim 7, further comprising a DC link (20) between the back-to-back AC-DC converters (18a,18b) and furthermore a DC bus (30) connected to the DC link (20).

9. Apparatus according to claim 8, wherein the DC bus (20) is a supply to a HVDC power line (32).

10. Apparatus according to claim 8 or claim 9, wherein the first and second generators (4a,4b) are rotary machines comprising field windings (34a,34b); and wherein the DC bus (30) serves as a supply to the field windings (34a,34b) of the first and second generators (4a,4b).

11. Apparatus according to any of claims 8, 9 or 10, wherein the first and second generators (4a,4b) are rotary electrical machines driven by turbines (2a,2b) and wherein the AC-DC converters (18a,18b) are operable in reverse as DC-AC start frequency converters for a start up of the first and second turbines (2a,2b) with power provided on the DC bus (30).

12. Apparatus according to any preceding claim, wherein the first and second generators (4a,4b) are rotary electrical machines driven by gas turbines (2a,2b).

13. A method of regulating a supply of electrical power, comprising:
connecting a power factor correction circuit (19) to receive input power from a first electrical generator (4a) and a second electrical generator (4b) and to deliver output power to a first AC power line (8a) and a second AC power line (8b); and
operating the power factor correction circuit (19) to combine the inputs to form the outputs and to control the power factors of the outputs.

14. A method according to claim 13, further comprising operating the power factor correction circuit (19) to combine the inputs to form the outputs to enhance the waveforms of the outputs.

15. A method according to claim 13 or claim 14, wherein the power factor correction circuit (19) is connected to supply all of the power of the first and second generators (4a,4b) to the power factor correction circuit (19) and the first and second AC power lines (8a,8b) receive all of their power from it.

16. A method according to claim 13 or claim 14, wherein:
the first AC power line (8a) is supplied by the first generator (4a);
the second AC power line (8b) is supplied by the second generator (4b); and
the power factor correction circuit (19) is connected between the first AC power line (8a) and the second AC power line (8b), whereby the power factor correction circuit (19) receives input power from the first and second generators (4a,4b) via the first and second AC power lines and delivers output power back to the first and second AC power lines to control the power factor of the supply on the first and second AC power lines (8a,8b).

17. A method according to any of claims 13 to 16, further comprising use of the power factor correction circuit (19) to distribute the power supplied by the first and second generators (4a,4b) between the first and second AC power lines (8a,8b) and each generator (4a,4b) is operated to supply the network loads presented on the respective power lines (8a,8b) or to compensate for reduced or zero power available from one of the generators (4a,4b).

18. A method according to any of claims 13 to 17, further comprising use of the power factor correction circuit (19) to direct power from one of the generators (4a,4b) to the other of the generators in order to perform a high voltage test of the other generator.
